# EUROPEAN PATENT APPLICATION

(11) **EP 4 560 813 A1**
(43) Date of publication of application: **28.05.2025**
(21) Application number: 23865874.4
(22) Date of filing: 14.09.2023
(51) Int. Cl.: H01M 50/367, H01M 50/375, H01M 50/342, H01M 50/24

(54) **BATTERY PACK CASE AND BATTERY PACK INCLUDING SAME**

(30) Priority: 16.09.2022 KR 20220117480; 11.09.2023 KR 20230120686
(71) Applicant: LG Energy Solution, Ltd., Seoul 07335 (KR)
(72) Inventor: NOH, Yu Han, Daejeon 34122 (KR)
(74) Representative: Plasseraud IP
(86) International application number: PCT/KR2023/013848
(87) International publication number: WO 2024/058578

(57) **Abstract**

A battery pack case according to an embodiment of the present invention includes a base plate, a side plate disposed along a circumference of the base plate and having a lower side connected to the base plate, a cover plate configured to cover an upper side of the side plate and define an accommodation space inside the base plate, a partition plate disposed in the accommodation space to partition the accommodation space into a plurality of spaces, and a top plate configured to define a flow path together with the cover plate and disposed above the cover plate.

## Description

### TECHNICAL FIELD

The present application claims the benefit of the priority of Korean Patent Application Nos. 10-2022-0117480, filed on September 16, 2022, and 10-2023-0120686, filed on September 11, 2023, which are hereby incorporated by reference in their entirety.

The present invention relates to a battery pack case and a battery pack including the same.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

The secondary battery may be provided in plurality, and then, the plurality of secondary batteries may be integrally accommodated to form a battery module, and a plurality of battery modules may be accommodated again in a specific pack case to manufacture a battery pack.

In the process of manufacturing the battery pack to be used in facilities and devices, there is a case in which a battery module accommodated in the battery pack is damaged to discharge high-temperature heat and a gas. A gas that is not discharged to the outside and thus is trapped in an internal storage space may cause secondary damages, such as exploding the battery pack or further damaging the battery module. Alternatively, when the plurality of battery modules are respectively accommodated in the plurality of accommodation spaces, a gas generated from a specific battery module is spread to the other battery module in the other space, and thus, the damage due to the gas may be transferred to other battery module, thereby causing the spreading of the damage.

Therefore, even if a gas is generated from the battery module, there is a need for a battery pack having a structure in which the generated gas is more effectively discharged and is prevented from being propagated to other spaces.

### DISCLOSURE OF THE INVENTION

### TECHNICAL PROBLEM

An object of the present invention for solving the above problem is to provide a battery pack in which a gas and heat generated from a battery module is cooled and discharged through a flow path structure.

### TECHNICAL SOLUTION

A battery pack case according to an embodiment of the present invention includes a base plate, a side plate disposed along a circumference of the base plate and having a lower side connected to the base plate, a cover plate configured to cover an upper side of the side plate and define an accommodation space inside the base plate, a partition plate disposed in the accommodation space to partition the accommodation space into a plurality of spaces, and a top plate configured to define a flow path together with the cover plate and disposed above the cover plate.

The cover plate may include a first plate connected to an upper side of the side plate, and a second plate connected to an upper side of the first plate and having a melting point lower than that of the first plate.

The cover plate may be configured to block communication between the plurality of spaces partitioned by the partition plate.

The cover plate may be configured to define a plurality of cover areas above the plurality of spaces to correspond to positions of the plurality of spaces.

The first plate may include a plurality of holes.

The plurality of holes may be defined in the cover areas.

The second plate may have a melting point lower than that of the top plate.

The cover plate may further include a fixing pin configured to fix the first plate to the partition plate.

A battery pack according to an embodiment of the present invention includes a case in which an accommodation space is defined, and a battery module including a plurality of secondary batteries and disposed in the accommodation space, wherein the case may include a base plate, a side plate disposed along a circumference of the base plate and having a lower side connected to the base plate, a cover plate configured to cover an upper side of the side plate and define an accommodation space inside the base plate, a partition plate disposed in the accommodation space to partition the accommodation space into a plurality of spaces, and a top plate configured to define a flow path together with the cover plate and disposed above the cover plate.

The cover plate may include a first plate connected to an upper side of the side plate, and a second plate connected to an upper side of the first plate and having a melting point lower than that of the first plate.

The cover plate may be configured to block communication between the plurality of spaces partitioned by the partition plate.

The cover plate may be configured to define a plurality of cover areas above the plurality of spaces to correspond to positions of the plurality of spaces.

The first plate may include a plurality of holes, and the plurality of holes are defined in the cover areas.

The second plate may have a melting point lower than that of the top plate.

### ADVANTAGEOUS EFFECTS

According to the preferred embodiment of the present invention, the gas and heat generated from the battery module may be cooled and discharged through the flow path structure to previously prevent the battery pack from being exploded or damaged by the gas and heat.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a cross-sectional view of a battery pack according to a comparative example.
FIG. 2 is a cross-sectional view illustrating a state in which a gas and heat are generated from the battery pack according to the comparative example.
FIG. 3 is a cross-sectional view of a battery pack case according to an embodiment of the present invention.
FIG. 4 is a bottom view of a cover plate according to an embodiment of the present invention.
FIG. 5 is a cross-sectional view of the cover plate according to an embodiment of the present invention.
FIG. 6 is a cross-sectional view of a battery pack according to an embodiment of the present invention.
FIG. 7 is a cross-sectional view illustrating a state in which a gas and heat are generated from the battery pack according to an embodiment of the present invention.
FIG. 8 is a plan view of the battery pack when viewed from the above according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

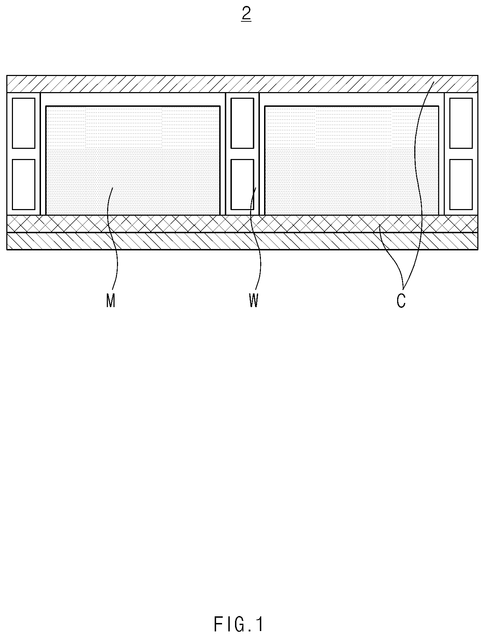

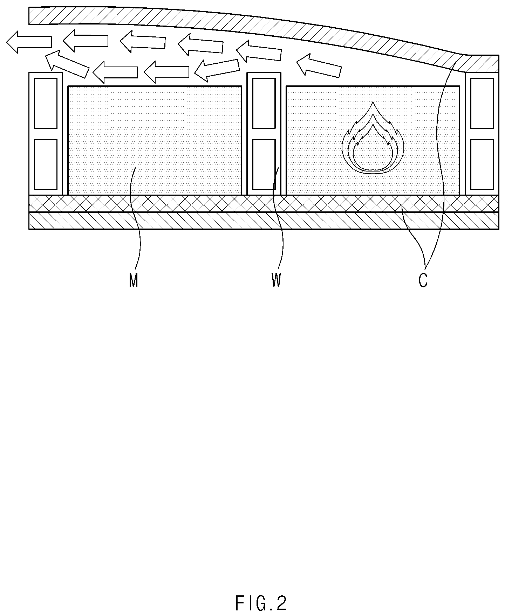

FIG. 1 is a cross-sectional view of a battery pack 2 according to a comparative example, and FIG. 2 is a cross-sectional view illustrating a state in which a gas and heat are generated from the battery pack 2 according to the comparative example.

Referring to FIGS. 1 and 2, the battery pack 2 according to the comparative example may include a case C that defines an outer appearance thereof and has an accommodation space, a partition wall W disposed inside the case C to partition the accommodation space into a plurality of spaces, and a plurality of battery modules M disposed in the plurality of spaces.

In the state in which the battery pack 2 accommodates the battery module M therein, when a specific battery module M discharges a gas and high-temperature heat due to internal damages or external factors, a pressure in a specific space in which the specific battery module M is accommodated may increase. As the pressure in the specific space increases, a specific portion of the case C may be destroyed. In particular, binding force between the case C and the partition wall W may be weakened, and a coupled portion of the case C and the partition wall W may be destroyed.

According to this phenomenon, the high-temperature heat and gas generated from the specific battery module M may flow into the other space to affect the other adjacent battery modules M. As a result, the gas and heat generated from the specific battery module M may not only destroy the case C, but also be spread to the other battery module M to cause spreading of the damage.

Thus, there is a need for a battery pack that more effectively discharges such a gas and heat to prevent other battery modules from being damaged and prevent the damage from being spread.

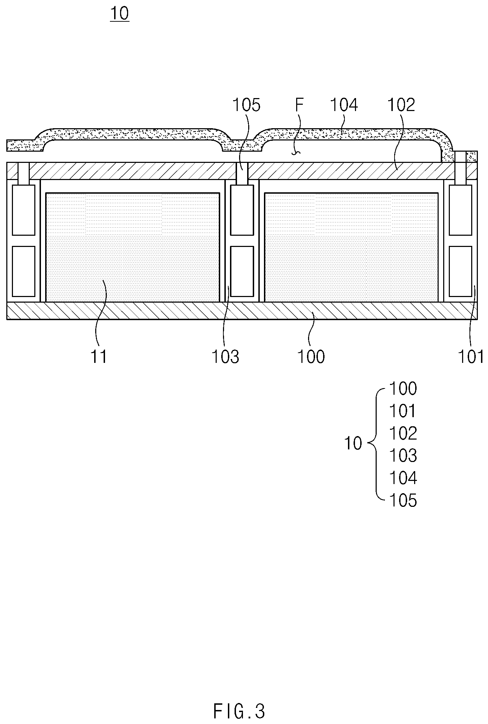

FIG. 3 is a cross-sectional view of a battery pack case 10 according to an embodiment of the present invention.

Referring to FIG. 3, the battery pack case 10 may form an accommodation space therein to accommodate a battery module 11, which will be described later. In other words, the battery pack case 10 may block communication between an internal space and an external space in the state of accommodating the battery module 11 therein to protect the battery module 11. For example, the battery pack case 10 may protect the battery module 11 from external environments such as high temperature and climate to prevent the battery module 11 from being damaged by external force.

In addition, the battery pack case 10 may partition the inner accommodation space into a plurality of spaces, so that the plurality of battery modules 11 are respectively disposed in the plurality of spaces. An upper portion of the battery pack case 10 may have a double structure, and the battery pack case 10 may effectively discharge the gas and heat generated from the specific battery module 11.

However, the battery module 11 may not be necessarily accommodated inside the battery pack case 10, and the battery pack case 10 may be used in a cell to pack (CTP) structure, that is, a structure in which no module is applied. In other words, the battery pack case 10 may accommodate a battery cell (not shown) including an electrode assembly in the plurality of internal spaces. That is, the battery cell (not shown) may be disposed inside the battery pack case 10. The battery cell (not shown) may include a pouch-type secondary battery or a prismatic-type secondary battery.

Specifically, the battery pack case 10 may include a base plate 100, a side plate 101, a cover plate 102, and a partition plate 103.

The base plate 100 may define a bottom surface of the battery pack case 10. In other words, the base plate 100 may be disposed at the lowermost end. The side plate 101 may be disposed along a circumference of the base plate 100. A lower side of the side plate 101 may be connected to the base plate 100. In addition, the cover plate 102 may cover an upper side of the side plate 101 to define the accommodation space inside the base plate 100. In addition, the partition plate 103 may be disposed in the accommodation space to partition the accommodation space into the plurality of spaces. Finally, the top plate 104 may be disposed at an upper side of the cover plate 102 to provide a flow path F between the top plate 102 and the cover plate 102.

The cover plate 102 may block communication between the plurality of spaces partitioned by the partition plate 103. In other words, the cover plate 102 may be connected to an upper side of the side plate 101 and an upper side of the partition plate 103 to block the communication between the plurality of spaces partitioned by the partition plate 103.

In this case, the cover plate 102 may define a plurality of cover areas on the upper sides of the plurality of spaces to correspond to the positions of the plurality of spaces. In other words, when viewed from the above, regions on which the plurality of spaces are defined and the plurality of cover areas may be disposed to correspond to each other. Specifically, each portion of the cover plate 102 disposed at the upper side of each of the plurality of spaces may be a cover area.

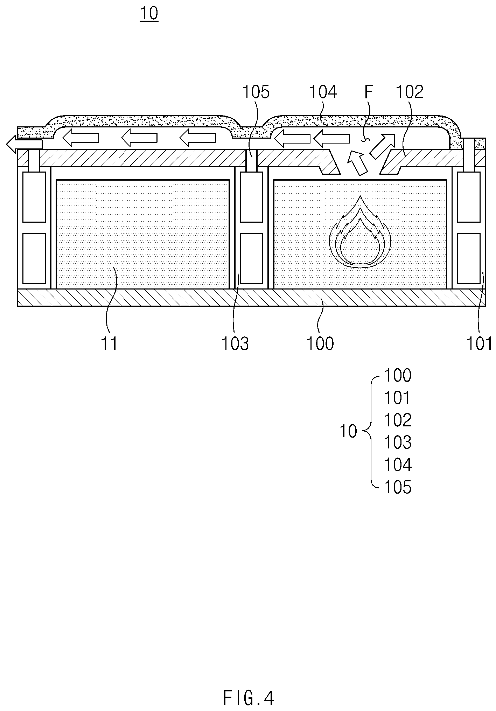

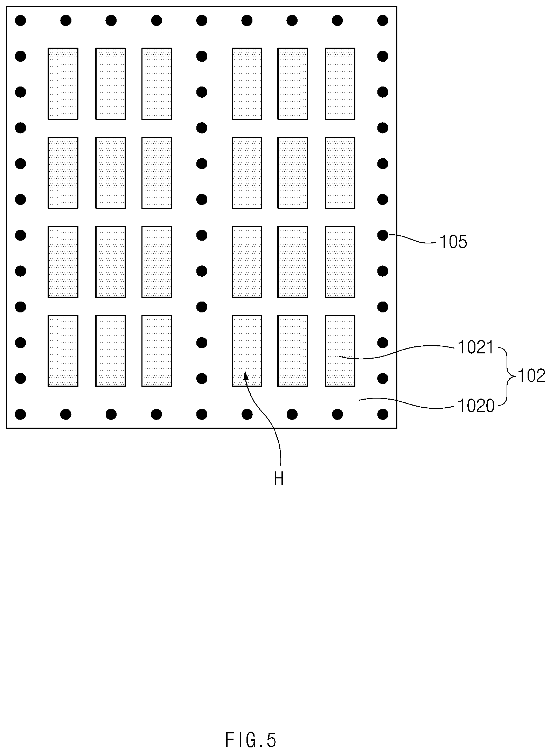

FIG. 4 is a bottom view of the cover plate according to an embodiment of the present invention, and FIG. 5 is a cross-sectional view of the cover plate according to an embodiment of the present invention.

Referring to FIGS. 4 and 5, the cover plate 102 may include a first plate 1020 and a second plate 1021.

The first plate 1020 may be connected to an upper side of the side plate 101. In addition, the first plate 1020 may be connected to an upper side of the partition plate 103. The first plate 1020 may define a bottom surface of the cover plate 102.

The first plate 1020 may include a plurality of holes H. For example, a plurality of holes H may be defined in the cover area. That is to say, when viewed from the above, the cover area and the region in which the plurality of holes H are defined may coincide with each other. In addition, an area on which the cover area is not formed may be an area on which the cover plate 102 and the partition plate 103 are coupled to each other. In addition, the area where the cover area is not formed may be an area where the cover plate 102 and the side plate 101 are coupled to each other.

The second plate 1021 may be connected to the upper side of the first plate 1020. Unlike the first plate 1020, the second plate 1021 may include a plate structure in which no hole H is defined. In other words, the second plate 1021 may be provided to cover the plurality of holes H defined in the first plate 1020. Specifically, in a state in which the plurality of holes H of the first plate 1020 are disposed at the upper side of the accommodation space, the second plate 1021 may block the plurality of holes H to seal the accommodation space, thereby sealing the accommodation space by the second plate 1021.

In this case, the second plate 1021 may have a melting point lower than that of the first plate 1020. In addition, the melting point of the second plate 1021 may be lower than that of the top plate 104.

The cover plate 102 may further include a fixing pin 105 that fixes the first plate 1020 to the partition plate 103. Specifically, the fixing pin 105 may have a pin shape and may pass through the first plate 1020 to connect a top surface of the partition plate 103 to a bottom surface of the first plate 1020. In other words, the fixing pin 105 may pass through the first plate 1020 from the upper side to the lower side and may be inserted into and coupled to the partition plate 103 to connect and fix the cover plate 102 to the partition plate 103.

As a result, when the high-temperature heat and gas are generated in the battery module 11, the second plate 1021 may be melted preferentially rather than the first plate 1020 and the top plate 104, and thus, the gas may flow through a flow path F between the cover plate 102 and the top plate 104. Since a gas that is relatively cooled compared to the gas exists in the flow path F, the gas moving into the flow path F may be in contact with the cooled gas and thus be cooled.

In this case, the fixing pin 105 may fix the partition plate 103 to the cover plate 102 to prevent the cover plate 102 from being separated from the partition plate 103, and thus, the gas generated from the battery module 11 may move to the flow path F in a state in which the gas is not propagated to other adjacent battery modules 11.

Hereinafter, the battery pack 1 according to an embodiment of the present invention will be described. Contents duplicated with those of the above-described battery pack case 10 will be omitted below.

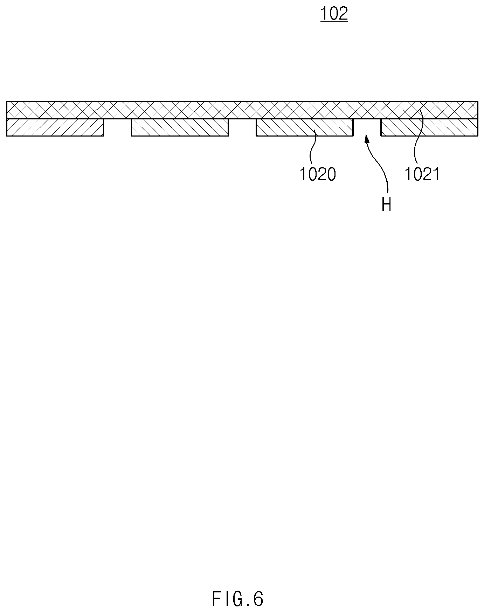

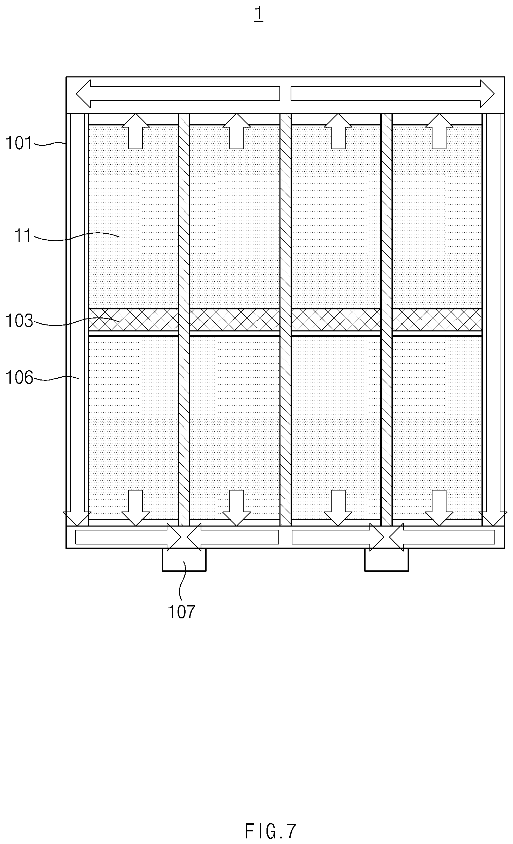

FIG. 6 is a cross-sectional view of the battery pack 1 according to an embodiment of the present invention, and FIG. 7 is a cross-sectional view illustrating a state in which a gas and heat are generated from the battery pack 1 according to an embodiment of the present invention.

Referring to FIGS. 6 and 7, the battery pack 1 according to an embodiment of the present invention may include a case 10 and a battery module 11 disposed inside the case 10 to accumulate electrical energy and then output the accumulated electrical energy according to a design. Here, each battery module 11 may include a plurality of secondary batteries and may be accommodated in an internal space of the case 10.

The case 10 may include a base plate 100, a side plate 101, a cover plate 102, and a partition plate 103.

The base plate 100 may define a bottom surface of the battery pack case 10. In other words, the base plate 100 may be disposed at the lowermost end. The side plate 101 may be disposed along a circumference of the base plate 100. A lower side of the side plate 101 may be connected to the base plate 100. In addition, the cover plate 102 may cover an upper side of the side plate 101 to define the accommodation space inside the base plate 100. In addition, the partition plate 103 may be disposed in the accommodation space to partition the accommodation space into the plurality of spaces. Finally, the top plate 104 may be disposed at an upper side of the cover plate 102 to provide a flow path F between the top plate 102 and the cover plate 102.

The cover plate 102 may block communication between the plurality of spaces partitioned by the partition plate 103. In addition, the cover plate 102 may define a plurality of cover areas on the upper sides of the plurality of spaces to correspond to the positions of the plurality of spaces.

Specifically, the cover plate 102 may include a first plate 1020 and a second plate 1021. The first plate 1020 may be connected to upper sides of the side plate 101 and the partition plate 103. The first plate 1020 may include a plurality of holes H. For example, a plurality of holes H may be defined in the cover area.

The second plate 1021 may be connected to the upper side of the first plate 1020. The second plate 1021 may have a melting point lower than that of the first plate 1020. In addition, the melting point of the second plate 1021 may be lower than that of the top plate 104.

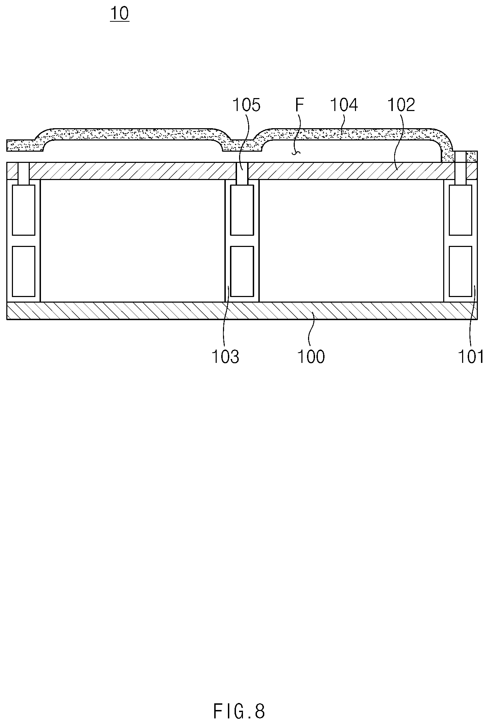

FIG. 8 is a plan view of the battery pack when viewed from the above according to an embodiment of the present invention.

Referring to FIG. 8, the case 10 may further include a discharge passage 106 communicating with the flow path F and an exhaust port 107 communicating with the discharge passage 106. For example, the gas generated in the battery module 11 may be discharged to a melted portion of the second plate 1021 through a plurality of grooves of the first plate 1020 to move to the discharge passage 106 along the flow path F. The gas moving to the exhaust passage 106 may be discharged to the outside through the exhaust port 107.

Here, the exhaust port 107 may include a pump and a fan to discharge the gas to the outside in various manners. In addition, the discharge passage 106 may be provided along an outer surface of the case 10. That is, the discharge passage 106 may be provided along a circumference of the case 10.

In addition, a vehicle (not shown) according to another embodiment of the present invention may include the battery pack 1 according to an embodiment of the present invention. That is, the vehicle (not shown) may utilize the electrical energy stored in the battery pack 1 as driving power. The vehicle may include railway vehicles and any transportation machinery that runs on roads. For example, the vehicle may include cars, motorized bicycles, trains, etc.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

1: Battery pack
10: Case
11: Battery module
100: Base plate
101: Side plate
102: Cover plate
103: Partition plate
104: Top plate
105: Fixing pin
106: Discharge passage
107: Exhaust port
1020: First plate
1021: Second plate
F: Flow path
H: Hole

## Claims

1. A battery pack comprising:
a case in which an accommodation space is defined; and
a battery module comprising a plurality of secondary batteries and disposed in the accommodation space,
wherein the case comprises:
a base plate;
a side plate disposed along a circumference of the base plate and having a lower side connected to the base plate;
a cover plate configured to cover an upper side of the side plate and define an accommodation space inside the base plate;
a partition plate disposed in the accommodation space to partition the accommodation space into a plurality of spaces; and
a top plate configured to define a flow path together with the cover plate and disposed above the cover plate.

2. The battery pack of claim 1, wherein the cover plate comprises:
a first plate connected to an upper side of the side plate; and
a second plate connected to an upper side of the first plate and having a melting point lower than that of the first plate.

3. The battery pack of claim 2, wherein the cover plate is configured to block communication between the plurality of spaces partitioned by the partition plate.

4. The battery pack of claim 3, wherein the cover plate is configured to define a plurality of cover areas above the plurality of spaces to correspond to positions of the plurality of spaces.

5. The battery pack of claim 4, wherein the first plate comprises a plurality of holes, and the plurality of holes are defined in the cover areas.

6. The battery pack of claim 2, wherein the second plate has a melting point lower than that of the top plate.

7. A battery pack comprising:
a case in which an accommodation space is defined; and
a battery cell comprising an electrode assembly and disposed in the accommodation space;
wherein the case comprises:
a base plate;
a side plate disposed along a circumference of the base plate and having a lower side connected to the base plate;
a cover plate configured to cover an upper side of the side plate and define an accommodation space inside the base plate;
a partition plate disposed in the accommodation space to partition the accommodation space into a plurality of spaces; and
a top plate configured to define a flow path together with the cover plate and disposed above the cover plate.

8. The battery pack of claim 7, wherein the cover plate comprises:
a first plate connected to an upper side of the side plate; and
a second plate connected to an upper side of the first plate and having a melting point lower than that of the first plate.

9. The battery pack of claim 8, wherein the cover plate is configured to block communication between the plurality of spaces partitioned by the partition plate.

10. A battery pack case comprising:
a base plate;
a side plate disposed along a circumference of the base plate and having a lower side connected to the base plate;
a cover plate configured to cover an upper side of the side plate and define an accommodation space inside the base plate;
a partition plate disposed in the accommodation space to partition the accommodation space into a plurality of spaces; and
a top plate configured to define a flow path together with the cover plate and disposed above the cover plate.

11. The battery pack case of claim 10, wherein the cover plate comprises:
a first plate connected to an upper side of the side plate; and
a second plate connected to an upper side of the first plate and having a melting point lower than that of the first plate.

12. The battery pack case of claim 11, wherein the cover plate is configured to block communication between the plurality of spaces partitioned by the partition plate.

13. The battery pack case of claim 12, wherein the cover plate is configured to define a plurality of cover areas above the plurality of spaces to correspond to positions of the plurality of spaces.

14. The battery pack case of claim 13, wherein the first plate comprises a plurality of holes.

15. The battery pack case of claim 14, wherein the plurality of holes are defined in the cover areas.

16. The battery pack case of claim 11, wherein the second plate has a melting point lower than that of the top plate.

17. The battery pack case of claim 11, wherein the cover plate further comprises a fixing pin configured to fix the first plate to the partition plate.

18. A vehicle comprising the battery pack of claim 1.
